# EUROPEAN PATENT APPLICATION

(11) **EP 3 272 428 A1**
(43) Date of publication of application: **24.01.2018**
(21) Application number: 17176965.6
(22) Date of filing: 20.06.2017
(51) Int. Cl.: B05D 3/02, B05D 3/06, B05D 5/06, B05D 7/14, B05D 7/00, B41M 3/00, B41M 7/00, B44C 1/18

(54) **SYSTEM AND METHOD FOR DECORATING METALS WITH MORE THAN ONE COLOR**

(30) Priority: 19.07.2016 US 201662363860 P
(71) Applicant: Univercol Paints Ltd., 42505 Netanya (IL)
(72) Inventor: Michal, Israel, 5403210 Givat Shmuel (IL); Mano, Ran, 7313300 Lapid (IL); Hindi, Assi, 46326 Hertzelia (IL); Buchman, Michael, 4931207 Petah Tikva (IL)
(74) Representative: Junghans, Claas

(57) **Abstract**

A method for applying a layer of a second color according to a predetermined pattern, on at least one face of a metal substrate, which is entirely painted with a first color comprising applying a primer according to a predetermined pattern onto at least one face of a metal substrate, applying thereto a UV curable powder coating comprising a second color that is different from the first color, removing excess of UV curable powder coating such that the UV curable powder coating remains only at a location on the metal substrate determined by the primer, activating IR and UV energy in order to cure the UV curable powder coating, and forming a metal substrate decorated with at least two colors according to the predetermined pattern on at least one face of the metal substrate, and a system for performing the same.

## Description

The present invention relates to a system and method of applying color on metals, and more specifically to printing on and decorating metals with more than one color according to a particular pattern.

Nowadays, painting metals is generally performed using thermal curing powder coating, which is an environmentally-friendly painting method compared to painting using paint comprising solvent. The powder is charged with positive electrical charge while sprayed through an electrostatic gun, and is evenly spread onto the metal object. The metal object is then heated, and the powder melts into a uniform film, and finally the metal object is cooled such that the powder forms a hard coating. Typically, the powders cure at 200 °C for a period of approximately 10 minutes following the metal reaching its melting temperature point. Heating the metal object is typically accomplished by convection cure ovens.

However, this technique is limited to coloring an entire metallic object in one shade of color only, since it is impossible to control powder sprayed onto a portion of the object. Instead, powder sprayed onto a metal object results in a uniform and even spread all over the object, as the electrically charged powder is attracted to the metal object and, for example, reaches the back side of the object even when only the front side of the object is sprayed with the powder. Furthermore, this technique doesn't enable decorating a metallic object with certain predefined shapes and patterns with more than one color, for the same reason that powder spraying, and more specifically spraying electrostatic powder on metal objects, is impossible to control. To enable coloring of a metal object in more than one color, and according to in a particular pattern, has great potential in the design and building market. For example, if a designer or builder were able to offer a client to design metal extrusions incorporated in their building, such that the external side of the extrusion is colored with one color (with or without decorations in a second color), while the side of the extrusion directed to the inside of the building may be colored with a second different color (with or without decorations in the second color), the possibilities may be endless, and may be adjusted per each client's preferences and desires.

There is therefore a need for a system and method that enable printing and decorating metals with more than one color, in an industrially applicable manner.

An industrially applicable system and method for painting metal objects with more than one color, and further decorating metal objects according to a particular pattern with more than one color, are provided.

One exemplary embodiment of the disclosed subject matter is a system comprising: a device for applying a primer according to a predetermined pattern onto at least one side of a metal substrate entirely painted with a first color, an electrostatic gun for spraying onto the primer a UV (Ultraviolet) curable powder coating comprising a second color, an air-gun for blowing air onto the UV curable powder for removing excess of UV powder such that the UV curable powder remains only at the location on the metal substrate determined by the primer, and an IR (Infrared) and UV (Ultraviolet)energy sources for curing the UV curable powder coating, whereby a metal substrate, decorated with at least two colors according to a particular predetermined pattern on at least one side of the metal substrate, is formed.

Another exemplary embodiment of the disclosed subject matter is a method comprising (a) applying a primer according to a particular predetermined pattern onto at least one side of a metal substrate entirely painted with a first color, (b) applying thereto a UV curable powder coating comprising a second color, wherein the second color is different from the first color, (c) removing excess of UV curable powder coating such that the UV curable powder coating remains only at a location on the metal substrate determined by the primer, (d) activating IR and UV energy in order to cure the UV curable powder coating, and (e) forming a metal substrate decorated with at least two colors according to a predetermined pattern on at least one side of the metal substrate.

Some non-limiting exemplary embodiments or features of the disclosed subject matter are illustrated in the following drawings.

Identical or duplicate or equivalent or similar structures, elements, or parts that appear in one or more drawings are generally labeled with the same reference numeral, and may not be repeatedly labeled and/or described.

Dimensions of components and features shown in the figures are chosen for convenience or clarity of presentation and are not necessarily shown to scale or true perspective. For convenience or clarity, some elements or structures are not shown or shown only partially and/or with different perspective or from different point of views.

References to previously presented elements are implied without necessarily further citing the drawing or description in which they appear.
Fig. 1 is a schematic diagram of a system for decorating a metal substrate with at least two colors according to a predetermined pattern on at least one side of the metal substrate, according to embodiments of the disclosed subject matter;
Fig. 2 is a flowchart of a method for decorating a metal substrate with at least two colors according to a predetermined pattern on at least one side of the metal substrate, according to embodiments of the disclosed subject matter;
Fig. 3A is a schematic diagram illustrating the steps of decorating a metal substrate with at least two colors according to a predetermined pattern on one side of the metal substrate, according to embodiments of the disclosed subject matter;
Fig. 3B is a schematic diagram illustrating the steps of decorating a metal substrate with at least two colors according to a predetermined pattern on one side of the metal substrate, according to embodiments of the disclosed subject matter;
Fig. 4 is a schematic diagram illustrating the steps of decorating a metal substrate with at least a third color according to a predetermined pattern on one side of the metal substrate, according to embodiments of the disclosed subject matter;
Fig. 5 is a schematic diagram illustrating the steps of decorating a metal substrate with at least two colors according to a predetermined pattern on a second side of the metal substrate, according to embodiments of the disclosed subject matter;
Fig. 6 is a schematic illustration of a top-side view of a system for decorating a metal substrate with at least two colors according to a predetermined pattern on at least one side of the metal substrate, according to embodiments of the disclosed subject matter;
Fig. 7 is a schematic illustration of various metal profiles representing the variety of profiles that a system for decorating a metal substrate with at least two colors according to a predetermined pattern is required to color, according to embodiments of the disclosed subject matter;
Fig. 8 is a schematic illustration of a side view of a printing module that is included in a system for decorating a metal substrate with at least two colors according to a predetermined pattern, according to embodiments of the disclosed subject matter;
Fig. 9 is a schematic illustration of a bottom view of a printing module that is included in a system for decorating a metal substrate with at least two colors according to a predetermined pattern, according to embodiments of the disclosed subject matter;
Fig. 10 is a bottom view of the printing area of a system for decorating a metal substrate with at least two colors according to a predetermined pattern is required to color, according to embodiments of the disclosed subject matter;
Fig. 11 is a top view of a sliding cylinder that is part of a conveyer that pushes metal profiles into the printing module, according to embodiments of the disclosed subject matter;
Fig. 12 is a side view of a portion of the printing module, according to embodiments of the disclosed subject matter;
Figs. 13A-13B are schematic illustrations of side-views of a powder coating and air-blowing module, without and with protecting side walls, respectively, according to embodiments of the disclosed subject matter;
Fig. 14 is a schematic illustration of a side view of a powder coating and air-blowing module, according to embodiments of the disclosed subject matter;
Figs. 15A-15B are schematic illustrations of a respective top-side view of an IR and UV module, and of a respective side view of a securing opening and closing mechanism located at the entrance of the IR andUV module, respectively, according to embodiments of the disclosed subject matter;
Fig. 16 is a schematic illustration of a side view of IR and UV module, according to embodiments of the disclosed subject matter; and
Fig. 17A-17B are schematic illustrations of a side view and a respective side view of a UV unit, respectively, according to embodiments of the disclosed subject matter.

In the context of the present disclosure, without limiting, the term 'substrate' relates to a base material that paint or primer may be applied onto.
In the context of the present disclosure, the term 'object' relates to anything that paint or primer may be applied onto.

In the context of the present disclosure, without limiting, the term 'primer' relates to a preparatory coating that is applied on a substrate painted with a first color, prior to painting the substrate with a second color, which is different from the first color. The pattern at which the primer is applied onto the painted substrate defines the pattern of the second color that is to be applied onto the primer.

In the context of the present disclosure, without limiting, the term 'digital printing' relates to a method of printing a pattern onto a substrate, in accordance with a predetermined digital-based image. In the context of the present disclosure, a digital printer prints a primer onto the object according to the pattern of the digital-based image.

In the context of the present disclosure, without limiting, the term 'entirely painted' relates to at least an entire side or face of a substrate or an object uniformly covered all over the side or face of the substrate or object, with at least one layer of color.

In the context of the present disclosure, the term 'predetermined pattern' relates to any shape or pattern or contour of a visual ornament or decoration according to which primer and paint may be applied onto a substrate or object, which may be predetermined or predefined prior to application of the primer and paint. The predetermined pattern includes a shape or pattern or contour which shows the color painted according to the predetermined pattern, as well as the color of the substrate or object prior to application of the predetermined pattern. The predetermined pattern also includes a shape or pattern which only shows the color painted according to the predetermined pattern, without showing the color of the substrate or object prior to application of the predetermined pattern. That is, the predetermined pattern includes a pattern according to which primer and paint are applied onto an entire side or face of a substrate or object, such that the substrate or object are uniformly coated all over their entire side or face with primer and paint.

The terms cited above denote also inflections and conjugates thereof.

Industrial painting methods of metals typically include using thermal curable powder coating that are sprayed onto a metal object by an electrostatic gun. This is a preferred method of painting metal objects since the powder is charged with positive charge while being sprayed onto the metal object, which causes the powder to electrically attract to the metal object and thus cover it in a uniform and homogenous manner. Since the powder is attracted to the metal object, the powder that is sprayed on one side of the metal object, independently reaches and is applied onto the opposite side of the metal object as well, though in a less homogenous manner, and there is a need to spray the powder directly onto the opposite side in order to achieve the same uniform coat as that of the first side. Thus, a painting method based on electrostatic powder enables very little control over painting the metal object with more than one color, e.g., painting one side of a metal object with one color, while painting another side of the metal object with a different color, let alone painting the metal object according to a predetermined pattern.

There is therefore a need for an industrially applicable system and method for painting and decorating metal objects with more than one color according to a predetermined pattern on at least one side of a metal object.
UV curable powder coatings are melted by exposure to IR energy. This process takes several seconds with a required final temperature of 90-200 °C of the surface of the object being coated. This melting process of UV curable powder coatings by IR requires lower energy consumption compared to the melting process of thermal curing powder coatings, since with thermal powder coatings the entire object that is being coated is to be heated to a temperature of 200°C in order for the thermal curing powder coating to melt, which takes much longer to happen and thus requires more energy than merely heating the surface of the object to up to about 200°C. Crosslinking or curing of the melted UV powder occurs by exposure to UV light for only a few seconds. Thus, the total curing time amounts to only a few minutes, e.g., approximately 1-2 minutes, which is much faster compared to curing time of thermal curing powder coating. Therefore, use of UV curable powder coating for painting metal objects benefits from the advantage of shorter time till end of curing, at least as compared to thermal curing.
In the context of the present specification, the term UV relates ultraviolet light as used in the art of printing. An UV illumination source having a maximum emission at 420nm (by way of non-limiting example, a gallium lamp) is considered within the UV range for the purpose of the present specification, as some of the peaks of this illumination source are within the UV range.

Digital printing enables accurate printing of any particular pattern and shape in accordance to a predefined digital-based image, while avoiding the costly need to manufacture a mask, stamp or printing plate per each pattern or shape that is to be applied onto an object. Therefore, printing a primer using a digital printer may enable printing the primer at a precise predefined pattern or shape onto a side or a face of a metal object that has already been colored with a first color, in order to create a metal object decorated with at least two colors in accordance with a predetermined pattern. The primer should be configured to enable such precise printing. Thus, the primer should be designed to have specific viscosity and stickiness characteristics that would enable precise application of the primer onto the metal object via a digital printing device. There is a delicate balance between the primer having high viscosity such to be applied accurately by the printing device according to the predetermined pattern (so the primer is not too thin, which might cause it to not stay at the proper location according to the predetermined pattern), while the primer not being too viscous, which would make it difficult for the primer to exit through the nozzles of the printing device.

Following printing of the primer at a desired pattern or shape onto the side or face of the metal object, UV curable powder coating comprising a second color may be sprayed onto the printed side of the object. Powder coating spreads uniformly onto the printed side of the sprayed metal object, thus excess of the powder that is not attached to the primer is required to be removed. Typically, removal of excess of powder may be performed using air blowing. Finally, the printed side of the metal object is exposed to IR light and to UV light, which cure the UV powder coating according to the predefined pattern at which the primer was printed onto the metal object. A metal object decorated with at least two colors according to a particular pattern is then formed.

According to one example, the pattern according to which the primer is applied onto the metal object may include the entire area of one side of the metal object, such that, one side or one face of the metal object is entirely painted with the color initially painted onto the metal object (the first color applied), while the other side or face is entirely painted with the second color of the UV curable powder. According to other examples, the pattern may include any kind of visual ornament or decoration that may show the second color of the UV curable powder as well as the first color initially painted onto the metal object. The pattern may include more than two colors, such that a primer may be printed and UV powder coating may be applied a plurality of times, as required to accomplish a multi-colored pattern.

A general non-limiting presentation of practicing the present disclosure is given below, outlining exemplary practice of embodiments of the present disclosure and providing a constructive basis for variant and/or alternative embodiments, some of which are subsequently described.

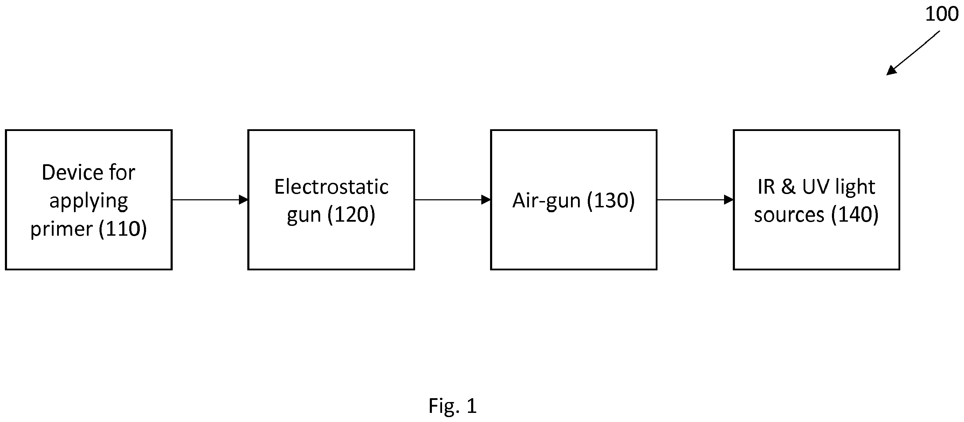

Reference is now made to Fig. 1, which is a schematic diagram of a system 100 for decorating a metal substrate with at least two colors according to a predetermined pattern on at least one side of the metal substrate, according to exemplary embodiments of the disclosed subject matter. According to some embodiments, the metal substrate may be made of any metal or alloy, for example, aluminum, iron, copper, steel and/or stainless steel. Any other metal may also be decorated with more than one color according to the disclosed subject matter. Typically, the metal substrate is initially painted with a thermal curable powder coating comprising a first color. The powder coating is sprayed onto the metal object via an electrostatic gun, such that the powder is attracted to the metal object and creates a uniform coating over the metal object. In other embodiments, the metal object may be painted with a first color via other methods of painting, e.g., anodizing coating process.

According to some embodiments, system 100 may comprise a device 110 for applying a primer onto a metal substrate or metal object. Device 110 may be configured to apply the primer onto the metal object according to a predefined or predetermined pattern. The predefined pattern may be selected by any person whom the painting and decorating of the metal object is for. The predetermined pattern according to which the primer is applied onto the metal object may be any kind of visual ornament or decoration, and in some embodiments may include a uniform covering of one side or face of the metal substrate. Typically, a digital file of the predetermined pattern is prepared, such that primer may be applied onto the metal object accordingly.

Preferably, device 110 may be a digital printer for digitally printing the primer according to a predetermined digital-based image. Digital printers that may be used to accomplish printing of a primer may be inkjet type printers, e.g., digital inkjet printers manufactured by Xerox, Fuji, Konica Minolta, Kyocera, etc. Such digital printers are required to be adjusted to printing primer instead of ink. For example, clogging of the nozzles of such printers may occur due to remains of dry primer. Primer may dry within the nozzles of the printers if primer is not continuously flowing through the nozzles, which may be the case when conforming the exit of the primer from certain nozzles to the predefined pattern of the digital-based image. In order to overcome such clogging of the nozzles of a digital printer, predetermined time periods for cleaning the nozzles of the printing system may be defined. The time periods at which cleaning of the printing system may take place, may be determined by the typical time it takes the primer to dry. Furthermore, implementing a thermal control unit in the printing system may assist in controlling the viscosity of the primer, thereby preventing it from drying and clogging the nozzles of the printing system.

In some embodiments, the pattern according to which the primer is applied, further defines the final pattern of the second color that is to be applied onto the primer.

In some embodiments, the primer that is applied onto the metal substrate may be any type of a UV based primer, a solvent based primer or a thermal based primer. A UV based primer may be a primer that changes its state from fluid (which is the state in which the primer is applied onto the metal substrate) to "sticky" (which is the state that enables other materials to adhere to it, e.g., the powder coating, as described hereinafter) only after activation via UV energy, e.g., after being positioned under a UV energy source. A solvent based primer may be a primer that changes its state from fluid to sticky following evaporation of the solvent. A thermal based primer may be a primer that changes its state from fluid to sticky after being thermally heated.

Since the sticky state of the primer is the state required for adhesion of a powder coating to the primer, it is beneficial to have the primer reach its sticky state soon after the primer is applied onto the metal substrate. This also ensures that the surface of the metal substrate that is now applied with primer, is smooth and aesthetic. When using a UV based primer, one method of accomplishing the primer reaching its sticky state soon after it is applied onto the metal substrate, includes verifying that an intensity of the UV energy activating the primer is sufficiently high, e.g. above a predetermined threshold..

On the other hand, the time till the second color (e.g., powder coating comprising the second color, as described hereinafter) is applied onto the primer is required to be soon after the primer has become sticky, in order to avoid a scenario of applying the second color onto a dry primer, which will not result with adhesion of the second color to the primer.

In some embodiments, system 100 may further comprise a powder coating injecting-gun 120. Powder coating gun 120 may be configured to spray a powder coating comprising a second color, onto the primer. In some embodiments, injecting gun 120 may be an electrostatic gun, which may be configured to spray the powder coating comprising the second color onto the primer, while charging the powder with positive electrical charge.

Preferably, the powder coating may be a UV curable powder coating, in order to enable working with lower energy compared to that used for curing thermal curable powder coatings, as well as shorten the curing time compared to that required per thermal curable powder coatings. However, in other embodiments, the powder coating may be a thermal curable powder coating or any other type of powder coating.

Some examples for powder coatings that may be applied onto the primer are polyester, polyester dry blend, superdurable resin, polyurethane, polyester, and acrylics. Powder coatings such as the ones mentioned, as well as others, may differ from one another in their durability to impact, to humidity, and to oxidization, and in their level of gloss, among other characteristics. Thus, the surface tension of each of the powder coatings is different, and should be taken into consideration with respect to the level of surface tension of the primer when applied onto the metal substrate, such that the difference between surface tension of a powder coating and that of the primer is not significant, which may prevent a homogenous layer of color from coating the metal substrate. Therefore, the primer is required to have a surface tension that conforms to those of the powder coatings, such to be of the same range.

Another requirement of the primer concerns impact. All powder coatings used for coloring metal substrates that are intended to be implemented as part of exterior surfaces, e.g., exterior surfaces of buildings, conform to standards of weather durability (e.g., durability to humidity, temperature and temperature changes, sun light, etc.), mechanical durability, and any other standard of the sort. Thus, all powders are found to have high impact durability during impact tests. The powder coating initially used to paint a first colored layer onto the metal substrate is connected to the metal substrate by mechanical and physical connections. However, once a primer is used, the connections between the primer and the first colored layer, as well as connections between the primer and the second colored layer, are chemical connections, which are stronger than mechanical and/or physical connections, and which may thus harm the strength of the connection between the first colored layer and the metal substrate. In order to ensure that the primer has high impact durability similarly to the impact durability of the powder coatings, and thus to enable the primer to absorb some of the energy or impact such that the first colored layer would stay intact and properly connected to the metal substrate, materials comprising high elasticity may be added to the primer, for example, resin may be added to the primer. By increasing the elasticity of the primer, the primer's impact durability is raised. In other examples, the adhesion force or adhesion connection between the primer and the first colored layer may be lowered, in order to prevent the primer from weakening the impact durability of the first colored layer.

According to some embodiments, it is important that the primer, and thus the entire painted metal object have good durability under external conditions of the environment for a long time period. For example, the metal object should be designed to withstand extreme weather changes without them causing any harm to the strength and durability of the painted metal object.

When using electrostatic powder coating injecting gun 120 for applying powder coating comprising a second color, the powder attaches to the metal object, thus typically covering the entire side of the metal substrate onto which the powder is sprayed. Furthermore, the powder may also cover at least some of the metal object's sides that are not in direct contact with the sprayed powder coating, e.g., a side that is opposite to the side or face onto which the powder is sprayed. In order to remove excess of the powder coating and thus maintain the powder coating only at the location on the metal object defined by the applied (e.g., printed) primer's location, system 100 may further comprise a compressed air-gun 130. Air-gun 130 may comprise multiple nozzles which air is pressurized therethrough. Air should be pressurized through air-gun 130 at a high pressure, e.g. around 6-8 bar, in order to properly remove the powder coating from the metal substrate, thus removing all powder coating from all around the metal substrate or metal object, except for the powder that is attached onto the primer. That is, the pressure of air-gun 130 should be lower than the strength of the connection between the powder comprising the second color and the primer. Air-gun 130 may be required to move around the metal substrate or object in order to ensure that all excess of the powder is removed from all portions of the substrate or object. In some embodiments, air-gun 130 may comprise a tank for maintaining high pressure of the compressed air, which is to be pressurized out of the nozzles of air-gun 130. Compressed air is preferably used for removing excess of powder that is not attached to the primer, since air blowing is a very efficient and quick method for removing excess of material, which requires little or no human involvement. In other embodiments, other methods of removing excess of powder that is not attached to the primer may be used, for example, brushing excess of powder using special brushes. In which case, instead of air-gun 130, system 100 may comprise other corresponding devices for removing excess of powder, e.g., brushes. In some embodiments, the excess of powder may be collected by a designated suction unit. According to some embodiments, the collected excess of powder may be re-used for future powder coating.

It is important to avoid any finger prints or any other materials with higher surface tension than that of the powder coating, which may leave marks such as sweaty, fatty or greasy marks from contacting the metal substrate. Fat, grease or sweat may adhere the powder coating such that even after air-blowing the excess of powder that is not attached to the primer, some of the powder coating may still stay attached to the metal substrate in areas where fat, grease or sweat were present, thus interrupting with cleanliness and precision of the predefined pattern. Therefore, in some embodiments, the production line may comprise a cleaning unit for cleaning the surface of the metal substrate after loading the metal substrate onto the production line (and prior to applying the primer) such to ensure a highly clean substrate and high quality of products.

Following removal of excess of powder, such that powder coating remains only at the location on the metal substrate or object defined by the primer, the powder needs to go through a curing process in order to form a strong and stable attachment with the metal substrate (or object, e.g., a metal profile). Preferably, the powder coating is UV curable powder coating, such that the powder is curable via application of IR and UV energy. Therefore, system 100 may comprise IR and UV energy sources 140, for curing the UV curable powder to the metal substrate according to the pattern defined by the primer and to which the powder has attached. The metal substrate may be placed into a device comprising IR and UV energy sources 140, in order to initiate the curing process. IR light causes the powder to melt and UV light causes the powder to cross-link with the metal substrate.

Since curing using IR and UV light is a quicker process than that using thermal energy, and since it further requires lower energy to accomplish curing, the powder coating used for painting the second color onto the metal substrate is preferably UV curable powder coating. Use of UV curable powder coating allows for a shorter as well as industrially applicable method of painting a metal substrate with a second colored layer, according to a predefined pattern, on top of a first colored layer. However, it should be noted that since UV light rays are parallel to one another, they may only reach a surface that is perpendicular to the rays. Therefore, when using UV curable powder coating, it is important to apply the primer and then the powder coating on a flat surface that is to be positioned perpendicularly to the angle of emerging UV light rays. Other surfaces, which are part of the metal substrate and which are not perpendicular to the UV rays, may not be cured, such that a pattern may not be created at those locations along the metal substrate.

The metal substrate or object cools down and may then be incorporated as part of any structure, e.g., in the building industry. For example, a metal object, e.g., an aluminum extrusion that is colored with one color on one side, while colored with a second color and/or pattern comprising a second color on the other side (typically the side opposite the first side) may be implemented as part of a building, such that one side of the extrusion is part of the exterior of the building, and the other side of the extrusion is part of the interior of the building, while each side may have a completely different color and/or pattern. The method of painting a first layer of a first color on both sides of a metal object, and then painting a second layer with a second color, either on the entirety of at least one side of the metal object, or according to a predetermined pattern (defined by a primer onto which the second color is attached) on at least one side of the metal object, enables endless designs of metal objects; where one side or one face of the object has one design, defined by color and/or pattern, which may be completely different compared to the design of a different side or face of the metal object.

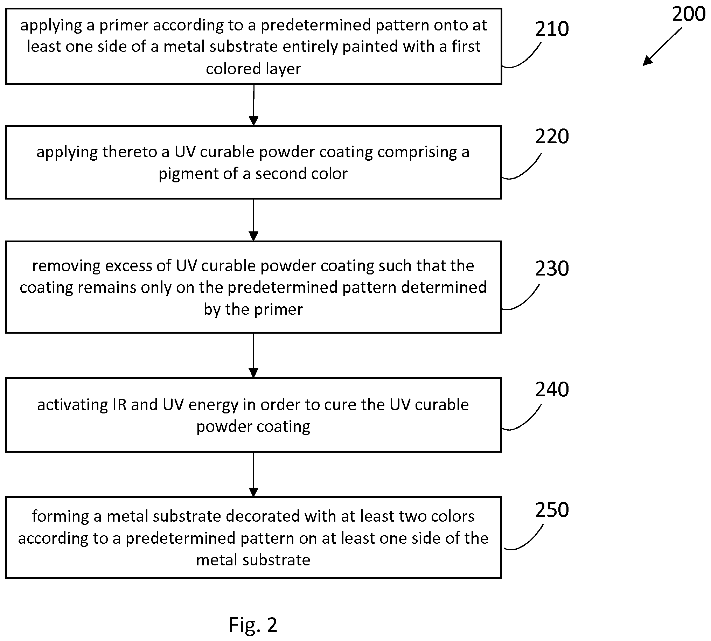

Reference is now made to Fig. 2, which is a flowchart of a method 200 for decorating a metal substrate with at least two colors according to a predetermined pattern on at least one side of the metal substrate, according to exemplary embodiments of the disclosed subject matter. Method 200 may comprise step 210 comprising applying a primer according to a predetermined pattern onto at least one side of a metal substrate entirely painted with a first colored layer. A metal substrate may initially be painted with a first colored layer. The metal substrate may be painted with the first color by any known method of painting metals, e.g., by using thermal curable powder coating, UV curable powder coating, or any other type of coating. The metal substrate is typically uniformly painted with the first color on all sides of the metal substrate.

In step 210, a primer is applied onto the colored metal substrate according to a predefined pattern, onto at least one side of the metal substrate, such that, for example, one side of the metal substrate may have a first color according to the first colored layer, while another side of the metal substrate may have a primer applied onto it in accordance with a particular pattern thus later causing that side to have a second colored layer according to a particular pattern. The primer is preferably applied via digital printing, though other methods of applying the primer may be implemented. Digital printing is a preferable method of applying the primer according to a predefined pattern, since digital printing is very precise and is quick enough to be used as part of a production line. The predefined pattern is loaded as a digital-based image onto a digital printer adjusted to printing primer. The primer is then digitally printed onto the metal substrate, thus defining the desired pattern that should appear on the metal substrate by the second colored layer.

System 200 may further comprise step 220, comprising applying a UV curable powder coating comprising a pigment of a second color, onto the metal substrate. In other embodiments, other types of powder coatings may be used, however, UV curable powder coatings are preferable, since they require lower energy and less time during the curing process, which is very cost effective. The UV curable powder coating is typically applied onto the metal substrate using a powder coating injecting gun, e.g., gun 120 in Fig. 1. Injecting the powder onto the metal substrate, causes the powder to attach onto the entire area of the side of the metal substrate that the powder is sprayed onto, and may even cause the powder to attach to other sides of the metal substrate. Thus, following application of the powder coating onto the metal substrate, there is no telling of which pattern the primer was printed according to.

Therefore, method 200 comprises step 230, which comprises removing excess of UV curable powder coating such that the coating remains only at a location determined by the primer. Step 230 of removing excess of the powder coating, typically UV curable powder coating, is an essential step to ensure powder coating comprising a second color remains only at the location defined by the primer, such that the pattern of the second colored layer is printed onto the metal substrate according to the predefined pattern with high precision and accuracy. Removal of excess of UV curable powder coating may be done using pressurized air, via an air-gun, e.g., air-gun 130, though other means may be used.

In some embodiments, method 200 may further comprise step 240, which comprises activating IR and UV energy in order to cure the UV curable powder coating. Since the powder coating is preferably UV curable powder coating, activation of IR and UV energy is required in order to accomplish curing of the powder coating so as to form a stable coating over the metal substrate. IR and UV energy is applied onto the coated metal substrate, via IR and UV energy sources, e.g., IR and UV energy-sources 140. After a period of approximately 1-2 minutes under approximately 200°C, the powder is fully cured and is uniformly coated onto the metal substrate, according to the particular pattern the primer was printed.

In some embodiments, method 200 may comprise step 250 comprising forming a metal substrate decorated with at least two colors according to a predetermined pattern on at least one side of the metal substrate. At the end of method 200, a metal substrate may be decorated such that each of the sides of the metal substrate is decorated with a different design. For example, one side of the metal substrate may comprise a first colored layer (e.g., according to the layer of color used to color the entire metal substrate, prior to the beginning of method 200), whereas another side of the metal substrate (typically an opposite side) may comprise a second colored layer according to a pattern, in addition to the first colored layer. The pattern according to which the second colored layer may be applied onto at least one side of the metal substrate, may be any visual decoration which may or may not show the first colored layer therethrough. In some embodiments, the pattern may be a multi-colored pattern comprising more than two colors. Thus, the primer may be applied onto the metal substrate colored with a first colored layer, in repeating steps. During each step, the primer may be applied onto the metal substrate per one color that is to be painted thereto. That is, the pattern may be divided into pattern portions corresponding to the number of colors that the pattern is made of. In each step, primer is applied/printed onto the metal substrate according to the pattern portion related to one of the colors. The corresponding powder coating comprising that color may then be applied onto the primer, excess of powder is removed, and the remaining powder is cured. Then primer is applied/printed onto the metal substrate according to a different pattern portion relating to a different color, and the process is repeated until the entire pattern is applied onto the metal substrate.

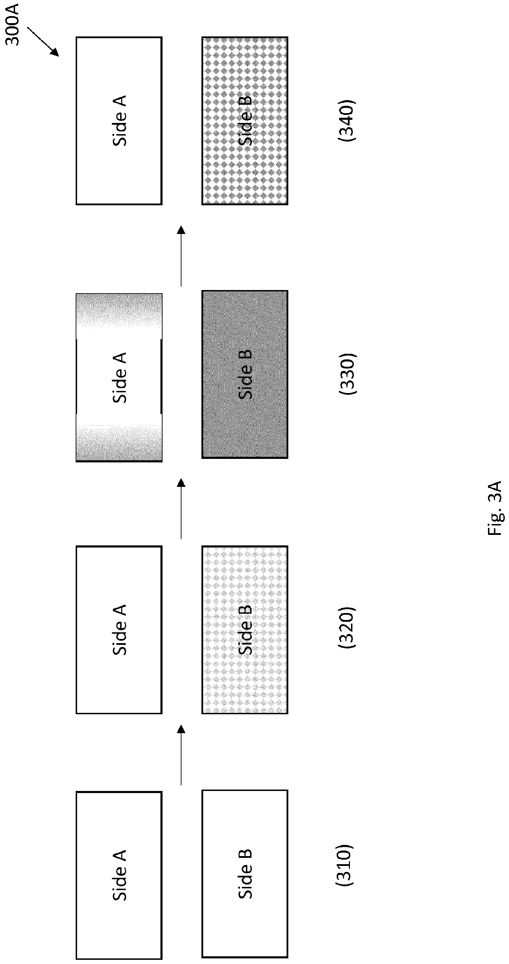

Reference is now made to Fig. 3A, which is a schematic diagram 300A illustrating the steps of decorating a metal substrate with at least two colors according to a predetermined pattern on one side of the metal substrate, according to exemplary embodiments of the disclosed subject matter. In step 310, a metal substrate comprising two sides is entirely painted with a color layer, such that side A and side B are colored with a first colored layer. For example, the first colored layer may be white, though any other color may be coated onto sides A and B. In step 320, primer is applied onto side B only. Primer may be applied onto side B by digital printing, and may be applied according to a predefined pattern. In the example illustrated in Fig. 3A, the pattern according to which the primer is applied onto side B of the metal substrate, may be an array of squares, which alternate between squares onto which primer is applied, and squares onto which no primer is applied, thus showing the color of the first colored layer. Other patterns may be implemented.

After printing or applying the primer onto side B of the metal substrate, a powder coating is applied onto side B in step 330. Typically, the powder coating is a UV curable powder coating, which may be sprayed via a powder coating injecting gun, e.g., gun 120. The powder may attach onto the metal substrate, thus coating side B in its entirety, and may even coat at least a portion of side A. In the example illustrated in Fig. 3A, the powder coating may coat side A in a non-uniform manner, e.g., to create a gradient of coated UV curable powder, on one or both ends of side A. The powder coating may comprise-a second color, which is different from the color of the first colored layer. In the example illustrated in diagram 300A, the color of the second color is grey, though any other color may be used to color the metal substrate.

In step 340, the excess of powder coating is removed from all sides of the metal substrate in order to achieve a metal substrate colored with two colors according to a particular pattern. Removal of excess of powder coating may be performed by air blowing, e.g., using pressurized air blown onto the metal substrate via an air-gun, e.g., air-gun 130. The force of the pressurized air should be stronger than that of the attachment between the powder coating and the metal substrate, in those sections of the metal substrate where no primer is applied, thus the powder coating remains on side B only in those locations where the powder is attached to the primer. Following a curing process of the powder coating, a metal substrate colored with at least two colors according to a predetermined pattern on one side (e.g., side B), while the other side is colored with at least one color (e.g., side A), may be formed. In some embodiments, the powder coating may be UV curable powder coating, such that IR and UV curing is required in order to form a stable coating on the metal substrate. IR and UV curing may be performed via IR and UV energy sources, e.g., energy sources 140. In other embodiments other types of powder coatings may be used, e.g., thermal curable powder coatings, in which case curing may be performed via a convection cure oven.

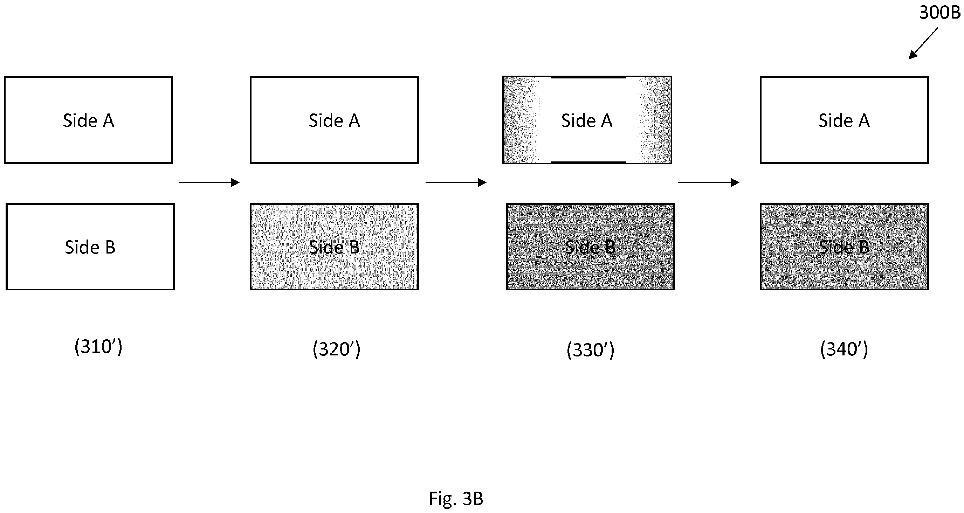

Reference is now made to Fig. 3B, which is a schematic diagram illustrating the steps of decorating a metal substrate with at least two colors according to a predetermined pattern on one side of the metal substrate, according to exemplary embodiments of the disclosed subject matter. In step 310', a metal substrate comprising two sides is entirely painted with a color layer, such that side A and side B are colored with a first colored layer. For example, the first colored layer may be white, though any other color may be coated onto sides A and B. In step 320', primer is applied onto side B only. Primer may be applied onto side B by digital printing, and may be applied according to a predefined pattern. In the example illustrated in Fig. 3B, the pattern according to which the primer is applied onto side B of the metal substrate, is uniform coating on the entire face of side B.

After printing or applying the primer onto side B of the metal substrate, a powder coating is applied onto side B in step 330'. Typically, the powder coating is a UV curable powder coating, which may be sprayed via a powder coating injecting gun, e.g., gun 120. The powder attaches to the metal substrate, thus coating side B in its entirety, and may even coat at least a portion of side A. In the example illustrated in Figs. 3A-3B, the powder coating may coat side A in a non-uniform manner, e.g., to create a gradient of coated UV curable powder, on one or both ends of side A. The powder coating may comprise a second color, which is different from the color of the first colored layer. In the example illustrated in diagram 300B, the color of the second color is grey, though any other color may be used to color the metal substrate.

In step 340', the excess of powder coating is removed from all sides of the metal substrate in order to achieve a metal substrate colored with two colors according to a predetermined pattern, which includes uniform coating of an entire face or side of the substrate. Removal of excess of powder coating may be performed by air blowing, e.g., using compressed air blown onto the metal substrate via an air-gun, e.g., air-gun 130. The force of the pressurized air should be stronger than that of the attachment between the powder coating and the metal substrate, while not being stronger than the physical connection between the powder coating and the primer is sticks to. The forced air may thus remove powder from those sections of the metal substrate where no primer is applied, e.g., on side A. Therefore, the powder coating remains all over the entirety of side B only. Following a curing process of the powder coating, a metal substrate entirely painted with at least one color on one of its sides (e.g., side A), while the other side (e.g., side B) is entirely painted with at least one second color, may be formed. In some embodiments, the powder coating may be UV curable powder coating, such that IR and UV curing is required in order to form a stable coating on the metal substrate. IR and UV curing may be performed via IR and UV energy sources, e.g., energy sources 140. In other embodiments other types of powder coatings may be used, e.g., thermal curable powder coatings, in which case curing may be performed via a convection cure oven.

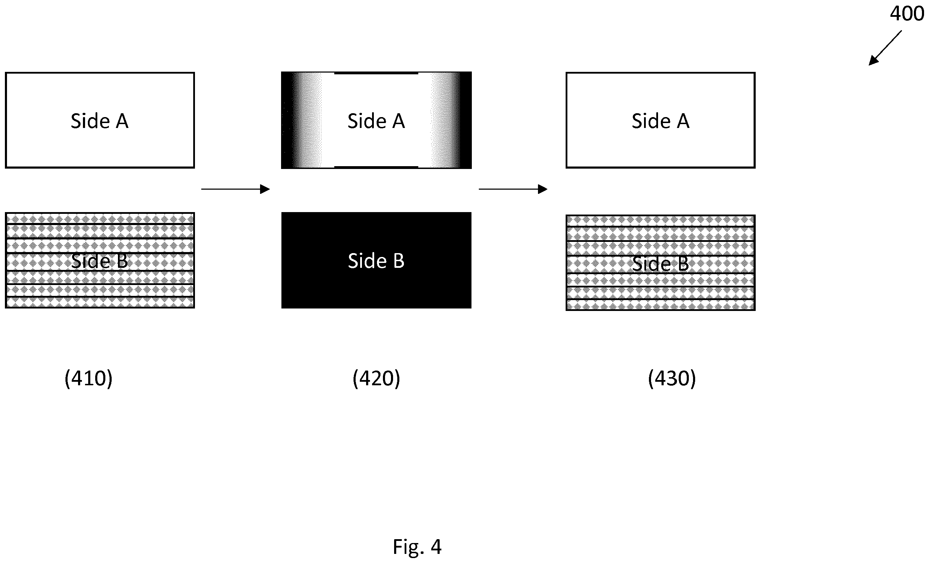

Reference is now made to Fig. 4, which is a schematic diagram 400 illustrating the steps of decorating a metal substrate with at least a third color according to a predetermined pattern on one side of the metal substrate, according to exemplary embodiments of the disclosed subject matter. Diagram 400 may illustrate the steps of applying a second layer of primer according to a second pattern, in order to apply an additional colored layer onto the metal substrate formed in Fig. 3A. Diagram 400 illustrates that there the number of layers of primer that may be applied onto the metal substrate is unlimited, and thus no limit to the number of colored layers that may be applied onto the primer, though each color is to be applied separately following application/printing of the primer according to the predefined multi-colored pattern.

In step 410, primer is printed on side B of the metal substrate, at a particular pattern on top of the 'squares' pattern accomplished in step 340. In the example illustrated in step 410, the pattern according to which the primer is printed on side B may be horizontal stripes or horizontal lines. In step 420, a powder coating may be applied onto side B. In the example illustrated in Fig. 4, the color of the powder coating is black, though any other color may be chosen. Typically, the powder coating is applied using a powder coating injecting gun, e.g., injecting gun 120, which sprays the powder onto the metal substrate. Attachment of the powder may be uniform all over the sprayed area, e.g., side B, thus side B may be entirely covered with the powder coating that comprises a third color, which is different from the first and second colors. In some embodiments, the sprayed powder may even reach areas of the metal substrate that are not in direct contact with the sprayed powder, for example, the powder coating comprising a third color, may attach to side A. Thus, efficient removal of excess of the powder coating is performed in step 430, such that powder remains only where it is attached to the primer, according to the pattern defined by the primer, e.g., powder is attached only along the horizontal lines defined by the primer. Removal of excess of powder may be performed using air-blowing, via an air-gun, e.g., air-gun 130, though other methods for removing powder that is not attached onto the primer, may be implemented.

After curing the powder (whether using UV, thermal or any other curing method which corresponds to the type of powder coating), the metal substrate is colored with three colors according to a particular pattern, on at least one side of the metal substrate. Specifically, in the example illustrated in diagram 400, side A of the metal substrate is colored with the first colored layer, while side B is colored with the first colored layer, a second colored layer according to one pattern (e.g., squares), and a third colored layer according to another pattern (e.g., horizontal lines). That is, according to the painting and decorating method and system of the disclosed subject matter, a metal substrate may be colored with more than one color, according to any predefined pattern, on at least one side of the metal substrate, while the other side of the substrate may be colored with at least one color.

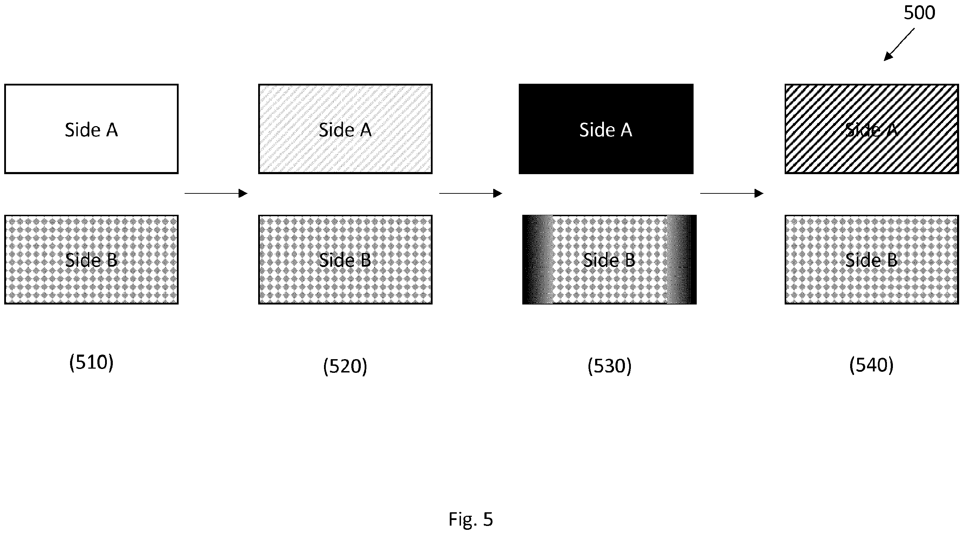

Reference is now made to Fig. 5, which is a schematic diagram 500 illustrating the steps of decorating a metal substrate with at least two colors according to a predetermined pattern on a second side of the metal substrate, according to exemplary embodiments of the disclosed subject matter. A metal substrate may be colored with more than one color according to a predetermined pattern on either or all sides of the metal substrate. In step 510, a metal substrate is colored on one side (side A) with an initially first colored layer, while another side (side B) is colored with at least a second color, which is different from the first color, and which is applied onto the substrate according to a predetermined pattern. In diagram 500, it is side A that is now being colored with a second color.

In step 520, a primer is applied onto side A according to a predefined pattern. The primer may preferably be applied onto the metal substrate by digital printing, which is a precise and relatively quick method for creating a pattern. According to the example illustrated in Fig. 5, the primer is applied on side A in a pattern comprising diagonal lines. Any other pattern may be implemented.

In step 530, side A is painted with powder coating comprising a second color, which is different from the color of the first colored layer, for example, the second color may be black while the first color is white. In other embodiments, any other colors may be used. The powder coating is typically applied via a powder coating injecting gun, e.g., injecting gun 120. An injecting gun may spray the powder coating in an even coat on the entirety of side A (while some of the powder may reach side B as well). In order to form a metal substrate colored according to a predetermined pattern, excess of powder that now coats the entire side A, (and some of side B) needs to be removed.

In step 540, excess of powder that is not attached to the primer according to the predefined pattern, is removed. Removal of excess of powder may be performed by pressurizing air through nozzles of an air gun, e.g., air-gun 130. All excess of the powder not attached to the primer is removed, and the pattern appears in the color of the second colored layer. In the example illustrated in Fig. 5, the pattern created on side A is colored black, though any other color may be used to color side A of the metal substrate.

The result of any of diagrams 300A, 300B, 400 and 500 is a metal substrate comprising at least two sides, wherein each side has a different design, whether the design is based on different color and/or on different pattern. According to the disclosed subject matter, a metal substrate may be colored with at least two colors according to a predetermined pattern, on at least one side of the metal substrate, such that each side of the metal substrate is decorated and colored differently with respect to other sides of the substrate.

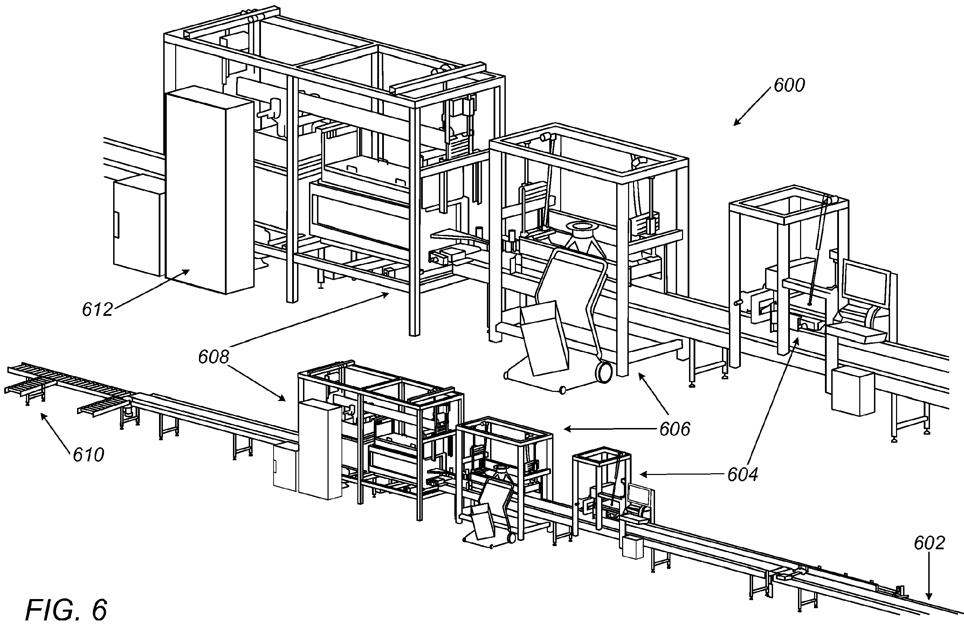

Reference is now made to Fig. 6, which is a schematic illustration of a top-side view of a system for decorating a metal substrate with at least two colors according to a predetermined pattern on at least one side of the metal substrate, according to embodiments of the disclosed subject matter. System 600 may comprise several modules whereby at least some of these modules may be equivalent to the units described in detail with respect to Fig. 1.

In some embodiments, system 600 may comprise an uploading unit 602, typically comprising a conveyer, which may be configured to upload a metal substrate, typically in the form of a metal profile, e.g., aluminum profile, into a printing module 604. Printing module 604 may comprise a printer, typically a digital printer that has been designed for printing primer on various types of profiles. That is, printing module 604 may be an adjustable module that adjusts its parameters and characteristics per the metal profile that is inserted therethrough. Printing module 604 may be equivalent to device 110 for applying primer (Fig. 1).

In some embodiments, system 600 may further comprise a powder coating and air-blowing module 606, which may be configured to apply powder onto the primer that had been printed onto a metal profile by printing module 604, as well as to blow excess of powder off the metal profile in order to ensure that the powder remains only at the location on the metal profile determined by the printed primer, and thus to avoid attachment of powder to areas along the profile which are not supposed to be colored. Module 606 may be equivalent to units 120 and 130 of Fig. 1.

In some embodiments, system 600 may comprise an IR and UV module 608 that may be configured to cure the powder, which may typically be UV curable powder, and thus to cause the powder to attach onto the metal profile, thereby coloring the metal profile according to the predetermined pattern of the printed primer. In some embodiments, module 608 may be equivalent to unit 140 of Fig. 1.

In some embodiments, system 600 may further comprise an off-loading area 610, which may be configured to enable easy and simple off-loading of the colored metal profile from system 600.

According to some embodiments, system 600 may comprise a control and electrical supply units 612, which may be configured to supply power to system 600, as well as control all modules of system 600.

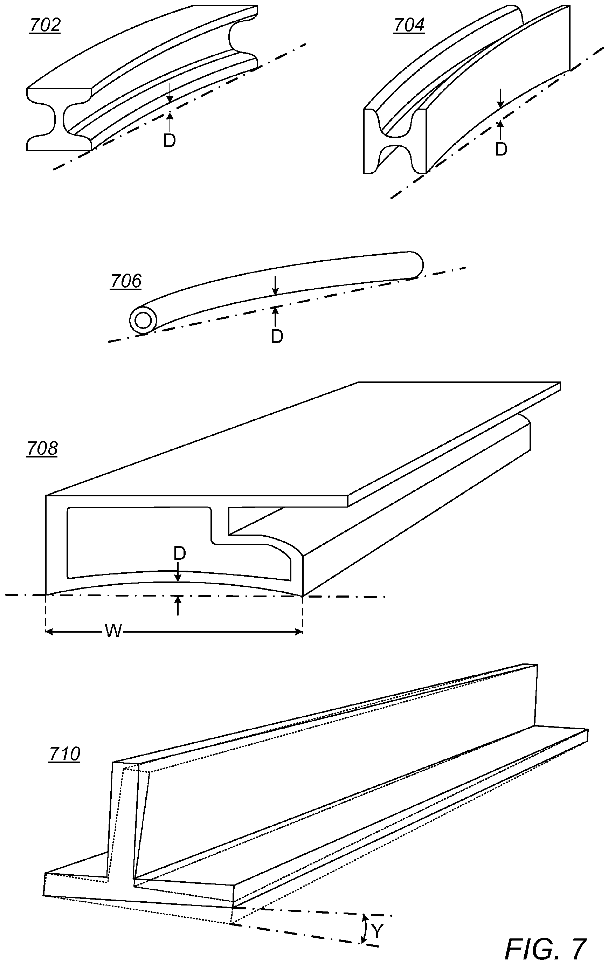

Reference is now made to Fig. 7, which is a schematic illustration of various metal profiles representing the variety of profiles that a system for decorating a metal substrate with at least two colors according to a predetermined pattern is required to color, according to embodiments of the disclosed subject matter. Metal profiles, e.g., aluminum profiles may appear in various shapes and sizes, all of which are should be able to pass through system 600 and exit with a printed pattern thereon. Thus, system 600 and more specifically, printing module 604, is required to adjust itself to the various types of metal profiles. For example, profiles 702, 704, 706, 708 and 710 are examples of metal profiles that may comprise a straight area of between 0.3mm to approximately 3.5mm, a cross section width of between 0 to 350mm, a curvature of the profile surface of between 0 to approximately 2.4mm, and full length bend of between 0 to approximately 8 degrees, which is typically equivalent to 14% of the cross section of the profile.

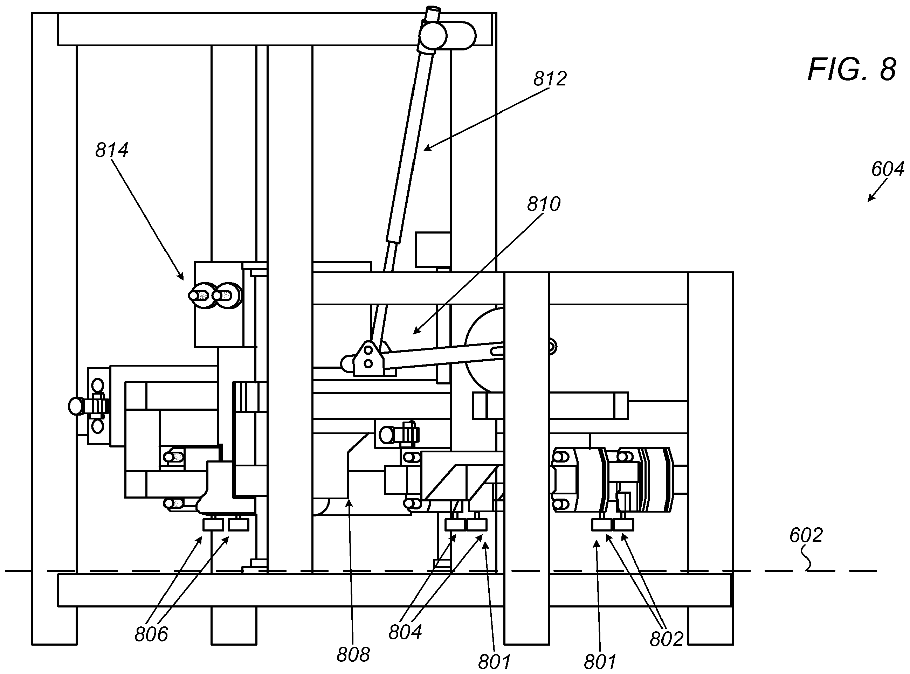

Reference is now made to Fig. 8, which is a schematic illustration of a side view of a printing module that is included in a system for decorating a metal substrate with at least two colors according to a predetermined pattern, according to embodiments of the disclosed subject matter. Printing module 604 may receive a metal profile into it via conveyer 602 (Fig. 6). Printing module 604 may comprise a system 801 for dictating lateral location of the loaded metal profile, in order to ensure that any metal profile is located at a certain predetermined location with respect to printer 814. The location of the metal profile with respect to printer 814 should be at a predetermined location, such to determine printing of the primer is according to the predetermined pattern and at the correct location along the metal profile. Lateral location system 801 may comprise clinching cylinders, e.g., clinching cylinders 802, 804 and 806. Each of the clinching cylinders 802, 804 and 806, typically comprise of two cylinders located on opposite sides of conveyer 602. For example, clinching cylinders 802 may comprise two opposing cylinders that may clinch and hug the metal profile, such that each of the pair of cylinders 802 supports and thus aligns one of the sides of the metal profile that is placed onto conveyer 802. Clinching cylinders 802 may be positioned at the entrance to printing module 604. An additional pair of typically opposing clinching cylinders 804 may be located further along printing module 604, in order to further support and align the metal profile as it continues to move along conveyer 602 towards printer 814.

In some embodiments, printing module 604 may further comprise an additional set of clinching cylinders 806, typically including a pair of cylinders located opposite one another, which may provide support and thus align the metal profile as it exits printing module 604. Since the metal profiles are typically longer than printing module 604, several pairs of clinching cylinders are required in order to ensure that a metal profile is constantly properly aligned with respect to the location of printer 814.

Clinching cylinders 802, 804 and 806 may slightly push any metal profile according to a predetermined position with respect to conveyer 602 and with respect to the location of printer 814, in order to determine that the position of the metal profile conforms to the predetermined pattern that is to be printed thereon by printer 814. That is, according to some embodiments, clinching cylinders 802, 804 and 806 may be able to move parallel to the longitudinal axis of conveyer 602, and parallel to the longitudinal axis of printing module 604.

In some embodiments, the distance between each pair of clinching cylinders should be small in order to be effective during operation of alignment of the metal profile, and yet not too small, in order for alignment to be effective. For example, the distance between each pair of clinching cylinders (e.g., cylinders 802, 804 and 806) may be approximately 400mm.

According to some embodiments, a first cylinder of any pair of clinching cylinders may be permanent such that is may not be moveable. The position of the first clinching cylinder may be predetermined based on the initial position of printer 814. Accordingly, the second cylinder of any pair of clinching cylinders may be moveable and change, for example via air pressure, such that the position of the second cylinder corresponds to the shape and dimension of the metal profile to ensure the metal profile is clinched and supported between the first cylinder and the second cylinder so it is aligned with respect to location of printer 814. In other embodiments, the first and second cylinders of any pair of clinching cylinders may be moveable to allow alignment of the metal profile with respect to the location of printer 814.

According to some embodiments, printing module 604 may further comprise a height adjustment system 812, which may be configured to adjust the distance between printer 814 and a metal profile that is loaded into printing module 604, with respect to the dimensions, specifically the height, of the metal profile. The distance between printer 814 and the media being printed, i.e., a metal profile, should be between 3mm to 5mm. The nominal distance of printer 814 from the metal profile may be adjusted prior to entrance of the metal profile into printing module 604. If the metal profile has a changing height along its longitudinal axis, this would require printer 814 to change its height with respect to the printing module 604, and thus maintain a substantially constant distance between printer 814 and the metal profile. Accordingly, height adjustment system 812 may comprise a tracing or tracking system 808, which may comprise a tracing roller. In cases where the tracing system 808, i.e., the tracing roller is in contact with the metal profile, after adjustment of the nominal distance between printer 814 and the metal profile at entrance of the metal profile into printing module 604, the metal profile may push the tracing roller upwards, which may cause printer 814 to be raised at the same distance equivalent to the distance that the tracing roller was pushed upwards by the metal profile. Therefore, tracing system 808 may be configured to maintain a substantially constant nominal distance between printer 814 and the metal profile such to ensure proper printing.

According to some embodiments, in order to enable raise of printer 814, printing module 604 may comprise a weight balance system 810, which may be configured to provide counter weight against the weight of printer 814. Thus, when tracing system or tracing roller 808 is pushed by a metal profile loaded into printing module 604, the weight balance system 810 enables printer 814 to raise accordingly, by balancing the weight of printer 814.

In some embodiments, in case the metal profile is loaded into printing module 604 such that the shape of the metal profile along its longitudinal axis is convex, then tracing system 808 may easily control the distance between printer 814 and the metal profile, since the convex shape of the metal profile continuously and smoothly pushes the tracing system, at least until the metal profile is loaded into the printing module such that tracing system 808 reaches the peak of the metal profile's concave shape.

In cases where the shape of the metal profile along its longitudinal axis is concave, at the entrance of the metal profile into printing module 604 there might be a sharp pushing force by the edge of the metal profile. Therefore, in order to decrease such an extreme pushing force, tracing system 808 may further comprise some kind of shock absorber, e.g., a spring, which may linger the time to complete the pushing movement caused by the metal profile pushing the tracing system 808. A longer movement may lead to slower accelerations within the system, which may further reduce the forces applied onto printer 814 in order to raise it, thereby avoiding damage to the printing mechanism, which includes injecting drops of color, or in this case drops of primer.

According to some embodiments, before printing module 604 there may be positioned a heating unit, such that the surface of a metal profile that is to undergo printing, is first heated. Heating the surface of the metal profile may improve its surface tension, thus optimizing the primer printing onto it.

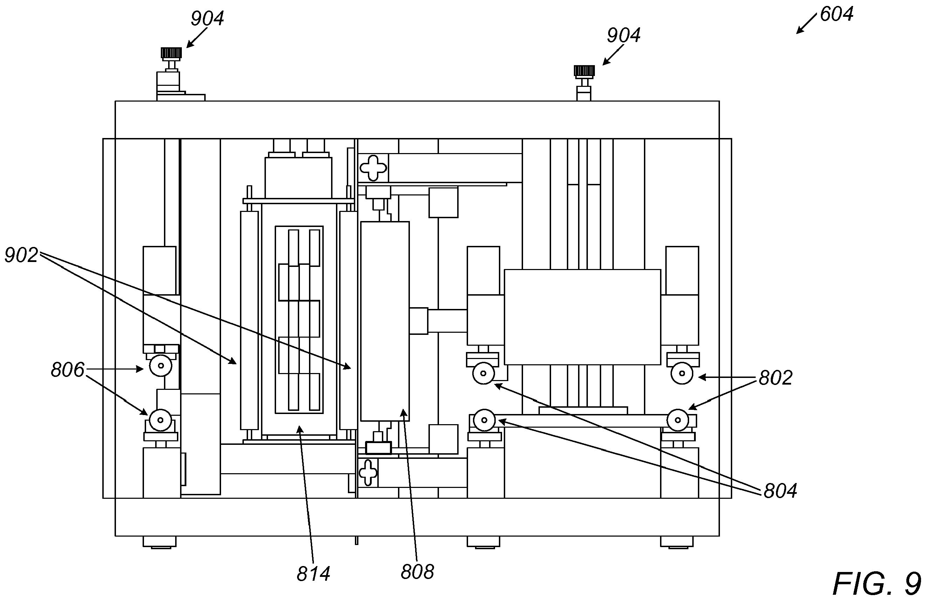

Reference is now made to Fig. 9, which is a schematic illustration of a bottom view of a printing module that is included in a system for decorating a metal substrate with at least two colors according to a predetermined pattern, according to embodiments of the disclosed subject matter. Printing module 604 may comprise clinching cylinders 802, 804 and 806, as described in detail in Fig. 8. According to some embodiments, the clinching cylinders may be controlled via a profile localization system 904. Profile localization system 904 may control the initial permanent location of the first cylinder of a pair of clinching cylinders, which corresponds to the initial location of printer 814. In addition, the movement of the second movable cylinder may be controlled via profile localization system 904. In other embodiments, profile localization system 904 may control movement of each cylinder of any pair of clinching cylinders 802, 804 and 806.

According to some embodiments, printing module 604 may comprise protecting cylinder s902, which may be located adjacent to printer 814. In some embodiments, printing module 604 may comprise two protecting cylinders 902, whereby each of protecting cylinders 902 may be located on an opposite side of printer 814. In other embodiments, other numbers and locations of protecting cylinders 902 may be implemented. Protecting cylinders 902 may be configured to ensure that there is no contact between printer 814 and the printed media, i.e., the metal profile, in order to avoid any damage to the printing mechanism, of printer 814.

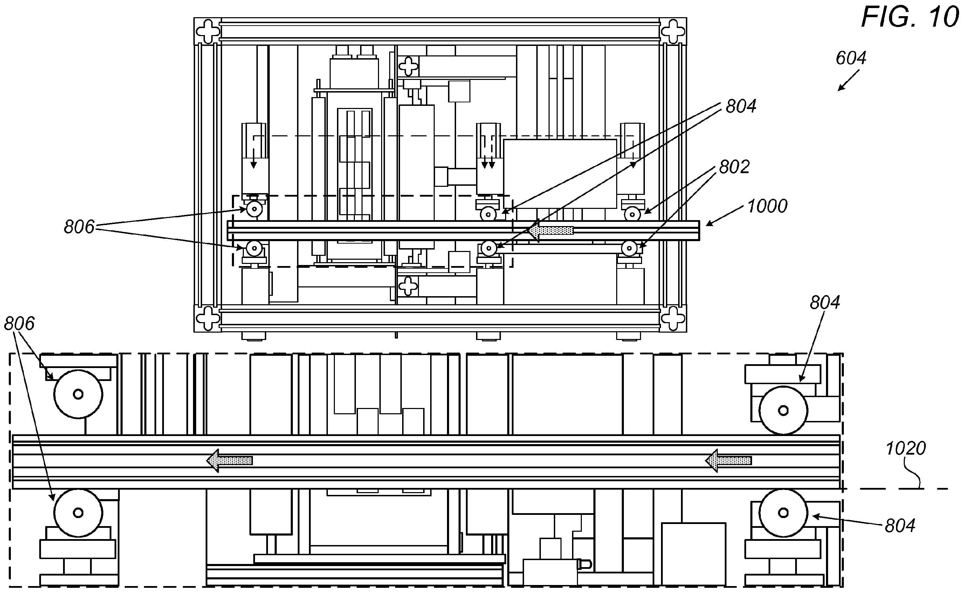

Reference is now made to Fig. 10, which is a bottom view of the printing area of a system for decorating a metal substrate with at least two colors according to a predetermined pattern is required to color, according to embodiments of the disclosed subject matter. Fig. 10 illustrates the "zero" line 1020 of printer 814, which corresponds to the initial location and position of printer 814, according to which location of the first cylinder of any pair of clinching cylinders may be determined.

In some embodiments, profile 1000 may be loaded via conveyer 602 (Fig. 6) into printing module 604. clinching cylinders 802 may be the first pair of cylinders that supports profile 1000 there between, whereas clinching cylinders 804 may be the next cylinders to support profile 1000 as it moves towards printer 814, and clinching cylinders 806 may be the pair of cylinders that support the profile 1000 during its exit from printing module 604, in order to provide further support and alignment of profile 1000 with respect to printer 814. In some embodiments, clinching cylinders 802, 804 and 806 may comprise a non-movable cylinder that may be aligned with respect to line "zero" 1020, which is based on initial location of printer 814. In some embodiments, the movable cylinder of the pairs of cylinders may move with respect to line "zero" 1020.

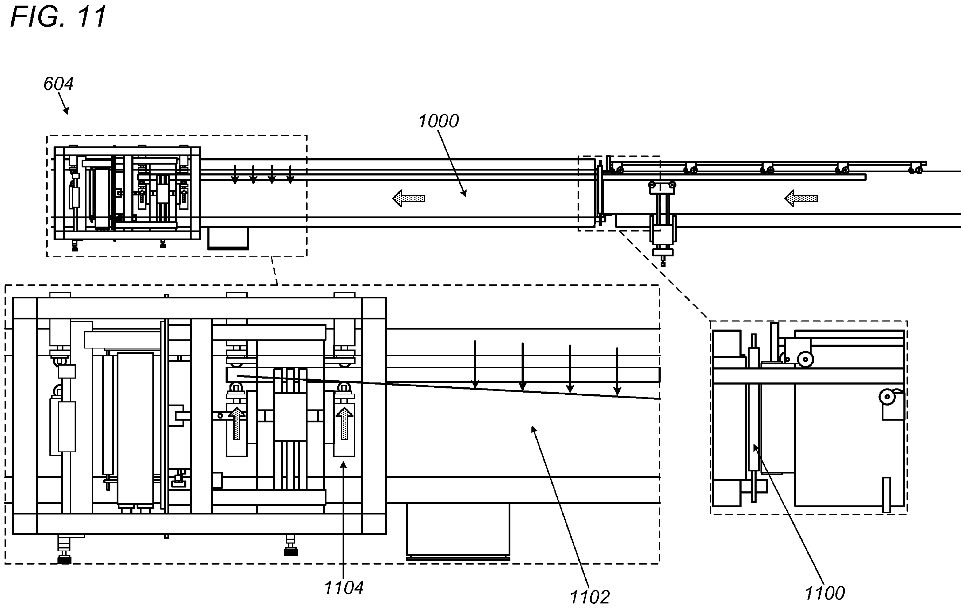

Reference is now made to Fig. 11, which is a top view of a sliding cylinder that is part of a conveyer that pushes metal profiles into the printing module, according to embodiments of the disclosed subject matter. In some embodiments, in order to reduce the forces that are required in order to align extremely long metal profiles, e.g., of lengths between 5m to 7m, along the conveyer 602 and with respect to the location and position of printer 814, system 600 (Fig. 6) may comprise a sliding cylinder 1100, which may be located along conveyer 602 prior to the entrance of printing module 604. Sliding cylinder 1100 may slightly elevate the metal profile 1000 such to reduce the friction force 1102 between profile 1000 and conveyer 602, and to reduce the pushing forces applied onto profile 1000 via the clinching cylinders in order to align it with respect to the position of printer 814. In some embodiments, the clinching cylinders may be pushed against profile 1000 using a piston 1104, which may use air pressure in order to operate the clinching cylinders.

In some embodiments, sliding cylinder 1100 may rotate and be elevated such to enable profile 1000 to rise and easily slid into position (with respect to the position of printer 814), with the assistance of clinching cylinders 802, 804 and finally cylinders 806.

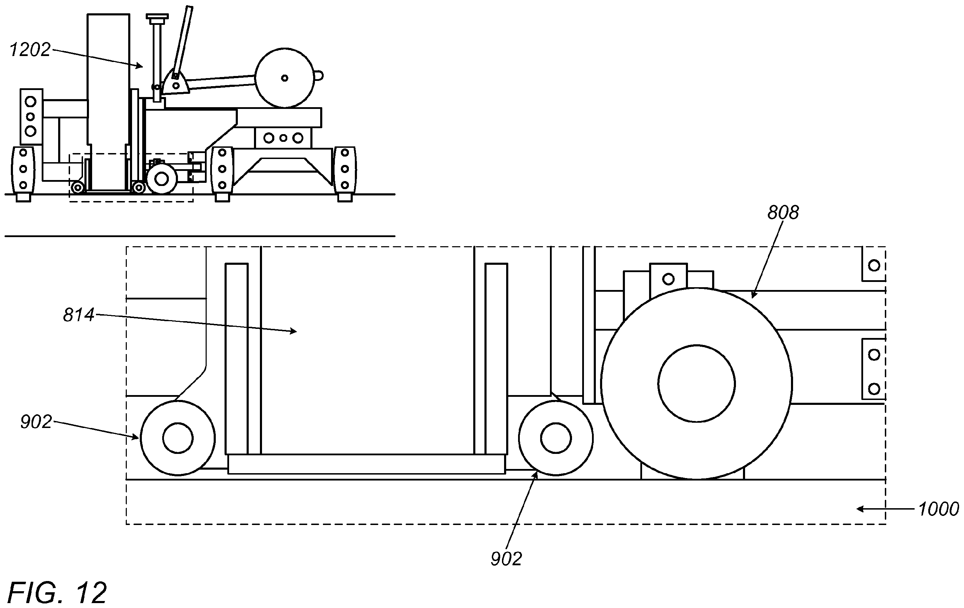

Reference is now made to Fig. 12, which is a side view of a portion of the printing module, according to embodiments of the disclosed subject matter. Fig. 12 illustrates in detail the purpose of tracing cylinder 808 and of protecting cylinders 902. According to some embodiments, tracing cylinder 808 may be located at a distance of approximately 2.5mm from the proximal end of the metal profile 1000, which is the end that enters printing module first. Printer 814 is typically initially located at a distance of approximately 5mm from the proximal end of profile 1000. The tracing cylinder 808 dictates the changing height of printer 814 according to the changing height of tracing cylinder 808, such that the distance between printer 814 and profile 1000 would be kept substantially constant during the entire primer printing process. If the tracing cylinder is touched and is thereby pushed by profile 1000, printer 814 is elevated by weight balance system 810, at a length that is equivalent to the length at which tracing cylinder 808 is raised by.

In some embodiments, protecting cylinders 902 may also be at a minimal distance of approximately 2.5mm from the profile 1000, in order to avoid contact between profile 1000 and printer 814, thereby avoiding damage to eh printing mechanism of printer 814.

In some embodiments, printer 814 may be situated on a floating system 1202, which may enable printer 814 to float above profile 1000 and avoid direct contact between printer 814 and profile 1000.

In some embodiments, printer 814 may be configured to print primer according to a predetermined pattern. The pattern may be preloaded onto printer 814 such that printer 814 may print the primer onto a metal profile, e.g., profile 1000, according to the preassigned pattern. In some embodiments, printer 814 may be a digital printer. In some examples, printer 814 may be designed to print along a maximal width of approximately 350mm, with printing resolution of up to 360[DPI]. In some examples, the printing speed of printer 814 may be up to a maximum of 5 meters per minute, and each drop of primer may be of a size of approximately 37 picoliter [pL]. In other embodiments and examples, other characteristics and other numbers may be implemented.

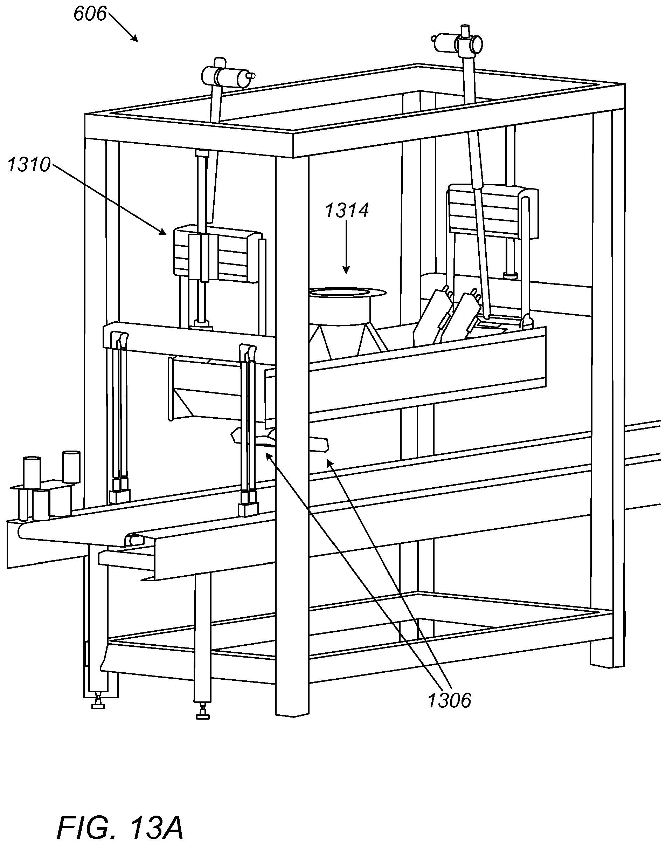

Reference is now made to Figs. 13A-13B which are schematic illustrations of side-views of a powder coating and air-blowing module, without and with protecting side walls, respectively, according to embodiments of the disclosed subject matter. As illustrated in Fig. 6, system 600 may comprise a powder coating and air blowing module 606, which may be configured to first inject powder onto profile 1000 and then to air-blow excess of powder off profile 1000 such that powder would be attached onto prolife 1000 only at the locations where primer was printed by printer 814.

In some embodiments, powder coating and air blowing module 606 may comprise a static frame 1302, which may encompass the components of module 606. In some embodiments, module 606 may comprise at least one powder coating gun 1304 that is configured to inject powder onto a metal profile that progresses along conveyer 602 and thus through all the modules of system 600. In addition, in order to remove excess of powder off the profile, module 606 may further comprise air blowing units 1306. Air blowing units 1306 may be located either on one side of powder gun 1304, or on both sides of powder gun 1304.

In some embodiments, module 606 may further comprise a suction unit 1308, which may suck the excess of powder that is being removed from the metal profile via air blowing units 1306. Suction unit 1308 may be configured to suck the flowing particles of the blown powder that was not attached onto the metal profile via the printed primer.

In some embodiments, module 606 may comprise a suction opening 1314, which may be configured to suck the excess of powder that is being removed from the metal profile via air blowing units 1306. The location of suction opening 1314 may be above the metal profile, typically between the powder coating gun 1304 and some of the air blowing units 1306. The pressure at which powder is sprayed out of powder coating gun 1304 is higher compared to the suction pressure of suction opening 1314, in order to avoid suction opening 1314 from sucking powder when it exits powder gun 1304 and before it reaches the primer printed onto the metal profile.

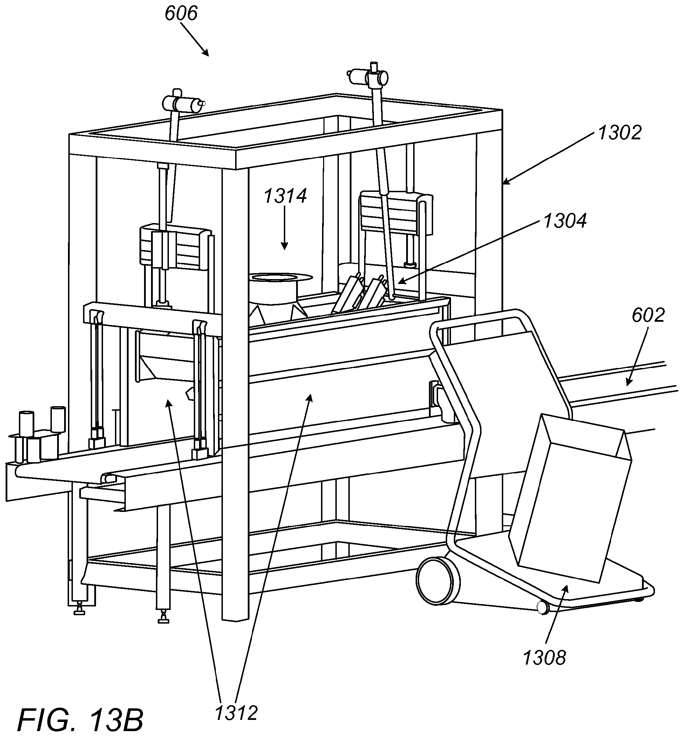

According to some embodiments, powder coating and air blowing module 606 may comprise an elevating unit 1310, which may be configured to elevate the powder coating gun 1304 and/or the air blowing units 1306 in order to maintain these units at a predetermined distance from the treated metal profile.As can be seen, Fig. 13B includes protecting walls 1312, which may be included as part of module 606 such to avoid excess of powder flowing randomly in the air along system 600. Fig. 13A does not include protecting walls 1312 in order to enable a better view of the components of module 606 that may be covered by protecting walls 1312.

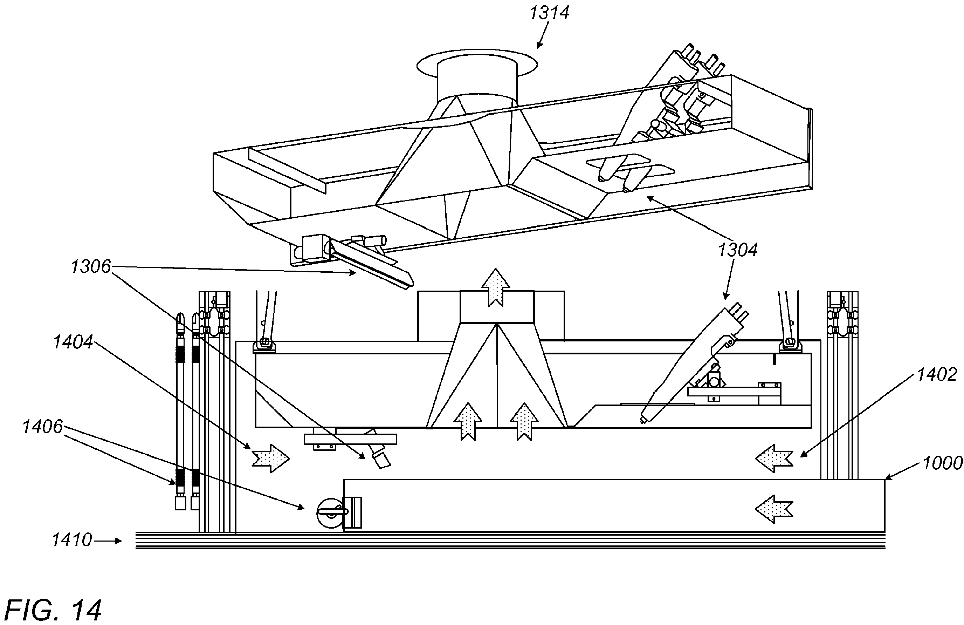

Reference is now made to Fig. 14, which is a schematic illustration of a side view of a powder coating and air-blowing module, according to embodiments of the disclosed subject matter. At least one powder coating gun 1304 may be configured to spray a powder coating at a second color that is different from the first color at which substantially the entirety of the metal profile is colored. The color of the powder is typically different from the total color of the metal profile in order for the pattern according to which primer was printed onto the metal profile, and according to which the powder coating is applied onto the metal profile, would be visible compared to the first color substantially coating the entirety of the metal profile prior to primer printing.

The angle at which the at least one powder coating gun 1304 is positioned at within module 606 and the distance between powder gun 1304 and the metal profile may be adjusted according to the shape of the metal profile, or according to characteristics of the powder and primer, e.g., affinity between the primer and the powder.

According to some embodiments, module 606 may further comprise air blowing units 1306, which may be configured to blow excess of powder off the metal profile, so that only where primer is printed would the second colored powder stay attached, and in areas lacking of primer, such powder would be removed, in order to ensure the powder would be attached only according to the predetermined and desired pattern.

Air blowing units 1306 may be located at various locations along module 606, e.g., at the proximal end of the profile, following spraying of the powder onto profile 1000 that may be carried by conveyer 1410. Other locations and angles of positioning may be adjusted according to the shape of metal profile being painted, and the location of slots along the metal profile.

In some embodiments, air may be allowed or even encouraged to enter into module 606 in order to facilitate air movement within module 606. Air movement within module 606 may assist with the air blowing process of removing excess of powder off the metal profile. Air may enter module 606 from the distal side of module 606, e.g., side 1402, and from the proximal side of module 606, e.g., from side 1404.

According to some embodiments, module 606 may comprise additional air blowing units at the sides of the metal profile, e.g., side-air-blowing units 1406, which may be configured to assist the main air blowing units 1306 in removing excess powder off the metal profile. The location and position, e.g., angle of position may be adjustable in accordance with the shape of the metal profile being handled, and the location of slots along the metal profile.

In some embodiments, module 606 may comprise a suction opening 1314 through which excess of powder may be removed from module 606. That is, powder that did not attach onto the printed primer, or which had been blown off the metal profile as being sprayed onto locations lacking of primer, may be sucked via suction opening 1314. Suction opening 1314 may be typically located above the metal profile between the at least one powder coating gun 1304 and the air blowing units 1306.

In some embodiments, the air blowing units 1316 and/or 1406 may also clean and clear the conveyer, e.g., conveyer 1410, by blowing the powder coating off it, while blowing the excess of powder off the metal profile.

In some embodiments, conveyer 1410 may be configured to be in the form of a closed loop such to that conveyer 1410 may rotate around the same loop over and over again. Conveyer 1410 may carry a metal profile, e.g., metal profile 1000, during the powder and air blowing process along module 606, and then be directed beneath powder coating and air blowing module 606 such to return back up adjacently to the opening of module 606, and so on, thereby creating the closed loop form. In some embodiments, a conveyer cleaning system may be located beneath conveyer 1410, e.g., at a location corresponding to conveyer 1410 being directed beneath module 606 and before conveyer 1410 returns back up next to the opening of module 606. A conveyer cleaning system may comprise, for example, air blowing units, which may blow powder off conveyer 1410 in order to clean conveyer 1410 from excess of powder after conveyer 1410 finished to carry one metal profile through module 606 and before conveyer 1410 carries a new metal profile through module 606. Cleaning conveyer 1410 may avoid powder from contacting the bottom portion of a new metal profile that may be loaded onto conveyer 1410, and thus avoid coloring the new metal profile not according to the predetermined pattern.

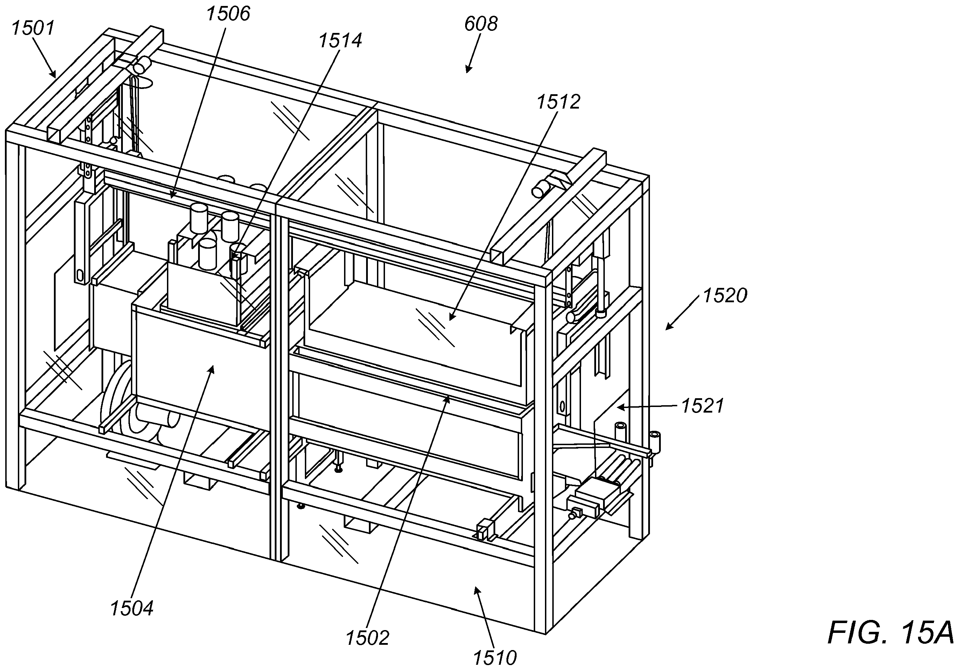

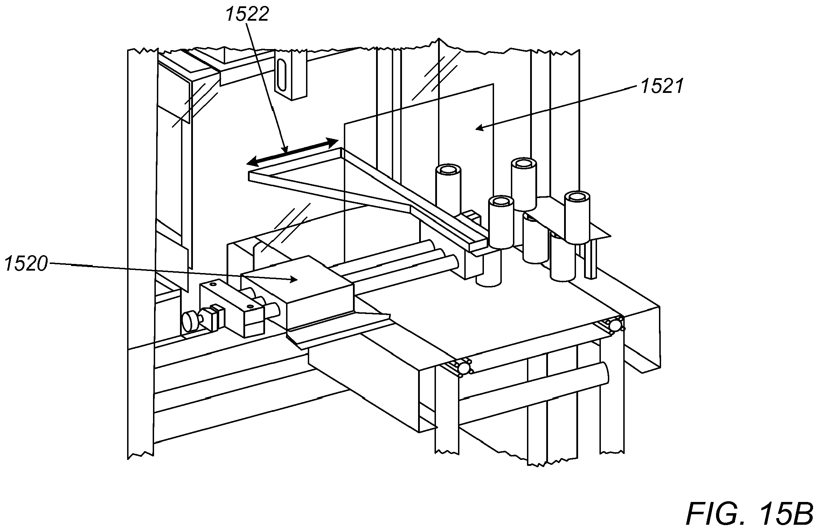

Reference is now made to Figs. 15A-15B, which are schematic illustrations of a respective top-side view of an IR and UV module, and of a respective side view of a securing opening and closing mechanism located at the entrance of the IR and UV module, respectively, according to embodiments of the disclosed subject matter.

As may be seen in Fig. 15A, IR and UV module 608 may comprise an IR unit 1502 and a UV unit 1504, enclosed within one or more static frame 1501. In some embodiments, IR unit 1502 may comprise an adjustable IR frame 1512, and UV unit 1504 may comprise a separate adjustable UV frame 1514. According to some embodiments, the position of each of IR unit 1502 and of UV unit 1504 may be adjusted via each of the corresponding adjustable frames 1512 and 1514, respectively, according to the optimal distance of each of the IR energy source 1502 and the UV energy source 1504 from a metal profile, in order to maximize the efficacy of operation of each of the IR and UV energy sources 1502 and 1504, respectively.

In addition, once the optimal location of each of IR unit 1502 and UV unit 1504 is determined via adjustable IR frame 1512 and adjustable UV frame 1514, the distance of IR unit 1502 and of UV unit 1504 from a specific metal profile may be adjusted via raising beam 1506, which may raise IR unit 1502 and UV unit 1504 at a required distance from the metal profile, while maintaining the adjusted location of each of these units via their adjustable frames 1512 and 1514. That is, raising beam 1506, may raise units 1502 and 1504 together, once the relative location of each of these units is determined by their respective adjustable frames 1512 and 1514, according to the optimal operation distance from a metal profile. Once the relative location between the two units 1502 and 1504 is determined and adjusted via their corresponding adjustable frames 1512 and 1514 per their optimal operation distance, units 1502 and 1504 may be raised or lowered simultaneously as one single unit away or towards the optimal and safe distance from any type of metal profile that is inserted into IR and UV module 608. For example, if the metal profile inserted into module 608 is of a large width, raising beam 1506 may simultaneously raise IR unit 1502 and UV unit 1504 as one unit, in order to distant both of these units (while maintaining their adjusted relative location) away from the metal profile up to the proper operation and safety distance. However, if the metal profile inserted into module 608 is of a small width, and the IR unit 1502 and UV unit 1504 are too far from the metal profile, raising beam 1506 may simultaneously lower these two units (while maintaining their adjusted relative location) closer to the metal profile until the optimal operation distance is reached.

In some embodiments, IR and UV module 608 may comprise covers 1510, which may isolate module 608 from the external environment. This is important since an extremely hot environment is necessary in IR unit 1502, and heat should be maintained within unit 1502 such to reach the required high temperatures, without any heat escaping from IR unit 1502. For example, the temperature within IR unit 1502 may reach 170 degrees Celsius, with a deviation of ±10 degrees Celsius. Since the typical time that a metal profile stays within IR section is approximately 5-10 seconds, which is very short, avoiding heat escape is an even more crucial aspect. As illustrated in Figs. 15A-15B, in addition to covers 1510, module 608 may further comprise an entrance adjusting system 1520 that may be configured to adjust opening and closing of the entrance 1521 to module 608. In order to avoid escape of heat from IR unit 1502, the entrance 1521 of module 608 may comprise entrance system 1520, which may be configured such that its closed state is its rest state. That is, system 1520 maintains the entrance 1521 of module 608 closed, unless a new metal profile pushes against the entrance 1521 in order to enter module 608. Entrance system 1520 may move along the directions illustrated by arrow 1522. Entrance system 1520 may be positioned such to close entrance 1521 by default, unless a metal profile is pushed against entrance system 1520 by the conveyer, which would cause entrance system 1520 to move such to open entrance 1521 and allow the metal profile to pass therethrough.

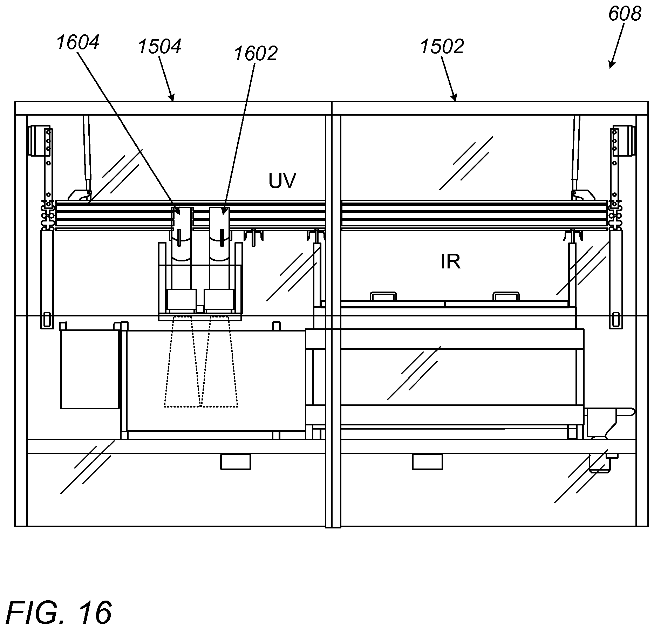

Reference is now made to Fig. 16, which is a schematic illustration of a side view of IR and UV module, according to embodiments of the disclosed subject matter. IR and UV module 608 may comprise two separate sections, IR unit 1502 for applying IR radiation and thus causing the coated powder to liquidize, and a UV unit 1504 for UV curing for causing the coated powder to solidify and cross-link with the printed primer and strongly attach to the metal profile. In some embodiments, UV unit 1504 may comprise at least one UV lamp, though in some embodiments, UV unit 1504 may comprise two UV lamps, which may illuminate at different wavelengths. For example, a first UV illumination source 1602 may illuminate at a wavelength of 420nm, while a second UV illumination source may illuminate at a wavelength of 360nm. It is clear that any other UV illumination source configured to illuminate at other wavelengths may be used, according to the type of powder coated onto the metal profile, and the type of primer printed onto the metal profile.

In some embodiments, the IR unit 1502 may comprise an IR illumination source irradiating at a wavelength approximately between 2000nm to 4000nm. The temperature

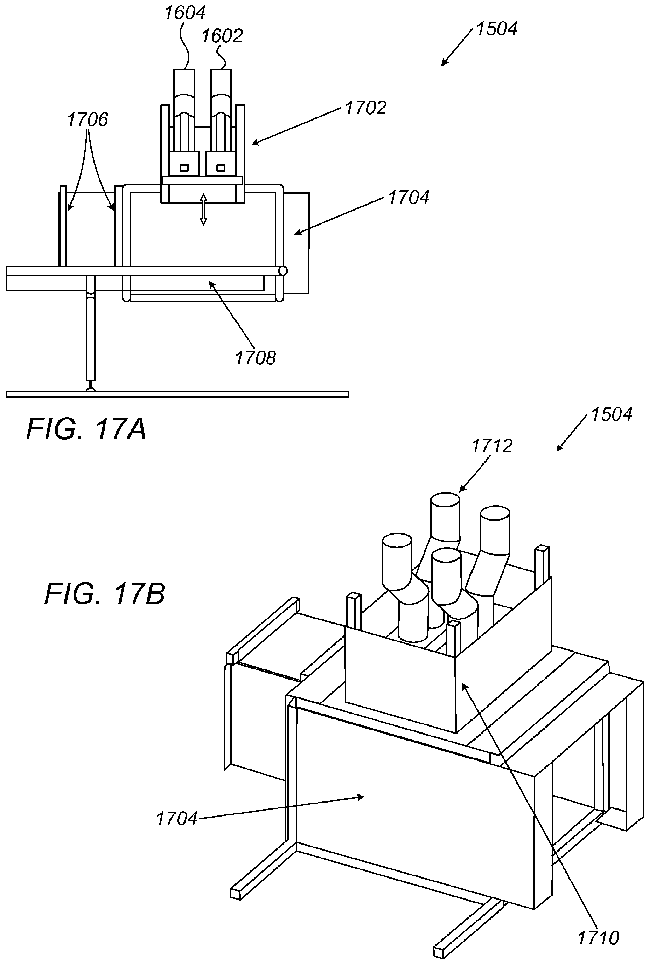

Reference is now made to Figs. 17A-17B, which are schematic illustrations of a side view and a respective side view of a UV unit, respectively, according to embodiments of the disclosed subject matter. According to Fig. 17A, UV unit 1504 may comprise two UV illumination sources 1602, and 1604. Other numbers of UV illumination sources may be implemented within UV unit 1504. UV unit 1504 may further comprise a conveyer 708 which is configured to carry the metal profile, which was already irradiated with IR in IR unit 1502.

In some embodiments, UV unit 1504 may further comprise a fixed protecting cell 1704, which may protect a user standing outside UV unit 1504 from being exposed to UV light. In some embodiments, UV unit 1504 may comprise a rising UV frame 1702, which may be configured to raise UV illumination sources 1602 and 1604 to the appropriate distance from the metal profile carried by conveyer 1708.

In some embodiments, UV unit 1504 may comprise brushes 1706, which may prevent UV light from exiting outside of UV unit 1504. Brushes 1706 may be located at a distance from one another; one may be located at the exit of UV unit 1504, while another one may be located farther along conveyer 1708 in order to protect a user standing outside IR and UV module 608 from exposure to UV light. The brushes 1706 may prevent UV light from passing therethrough.

According to Fig. 17B, UV unit 1504 may comprise a cooling unit 1712. Cooling unit 1712 is configured to cool the metal profile while entering into UV unit 1504, since UV illumination sources are sensitive to heat. Thus after the metal profile is heated by the IR unit 1502 to very high temperatures, it is then cooled by cooling unit 1712 such to enable proper operation of UV illumination sources 1602 and 1604.

In some embodiments, UV unit 1504 may comprise a service opening 1710 through which a user may have access to fix or attend any problem that may occur to UV unit 1504.

In some embodiments, following exit of the metal profile from IR and UV module 608, the metal profile may be offloaded from system 600 (e.g., at area 610, Fig. 6) and may be moved to storage and/or packaging.

At the end of system 600, metal profiles are typically of one major background color, which is colored all over the metal profile, along with a decoration at a color typically different from the background color, which was applied according to a predetermined pattern. Any pattern may be printed onto the metal profiles via the printed primer in printing module 604, and any color may be applied onto the primer via powder coating and air blowing module 606. IR and UV module 608 ensure that the coated color is strongly attached to the primer and onto the metal profile, thus providing a long lasting patterned decoration onto substantially any shape and size of metal profile.

The corresponding structures, materials, acts, and equivalents of all means or step plus function elements in the claims below are intended to include any structure, material, or act for performing the function in combination with other claimed elements as specifically claimed. As used herein, the singular forms "a", "an" and "the" are intended to include the plural forms as well, unless the context clearly indicates otherwise. It will be further understood that the terms "comprises" and/or "comprising" and/or "having" when used in this specification, specify the presence of stated features, integers, steps, operations, elements, and/or components, but do not preclude the presence or addition of one or more other features, integers, steps, operations, elements, components, and/or groups thereof.

The terminology used herein should not be understood as limiting, unless otherwise specified, and is for the purpose of describing particular embodiments only and is not intended to be limiting of the disclosed subject matter. While certain embodiments of the disclosed subject matter have been illustrated and described, it will be clear that the disclosure is not limited to the embodiments described herein. Numerous modifications, changes, variations, substitutions and equivalents are not precluded.

## Claims

1. A method for applying a layer of a second color according to a predetermined pattern, on at least one face of a metal substrate, which is entirely painted with a first color said method comprising:
(a) applying a primer according to a predetermined pattern onto at least one face of a metal substrate entirely painted with a first color;
(b) applying thereto a UV curable powder coating comprising a second color, wherein said second color is different from said first color;
(c) removing excess of UV curable powder coating such that the UV curable powder coating remains only at a location on the metal substrate determined by the primer;
(d) activating IR and UV energy in order to cure the UV curable powder coating; and
(e) forming a metal substrate decorated with at least two colors according to the predetermined pattern on the at least one face of the metal substrate.

2. The method according to claim 1, wherein said primer is selected from a group of primers consisting of: UV based primers, solvent based primers and thermal based primers.

3. The method according to claim 1, comprising, prior to applying the primer, entirely painting the metal substrate with a first color.

4. The method according to claim 3, wherein said step of entirely painting the metal substrate with a first color comprises applying an electrostatic thermal curing powder coating comprising the first color.

5. The method according to claim 1, wherein applying the primer is performed by digital printing.

6. The method according to claim 1, wherein removing excess of the UV powder is performed using air blowing.

7. The method according to claim 1, wherein said metal substrate is made of a metal selected from a group consisting of: aluminum, iron, copper, steel, stainless steel, and an alloy thereof.

8. The method according to claim 1, wherein steps (a)-(d) are repeated with at least one additional color, as determined by the predetermined pattern.

9. A system for applying a layer of a second color according to a predetermined pattern, on at least one face of a metal substrate, which is entirely painted with a first colored layer, said system comprising:
a device for applying a primer according to the predetermined pattern onto at least one face of a metal substrate entirely painted with a first color;
an injecting gun for spraying UV curable powder coating onto the primer, wherein said UV curable powder coating comprises a second color;
an air-gun for blowing air onto the UV curable powder for removing excess of UV powder such that the UV curable powder remains only at the location on the metal substrate determined by the primer; and
an IR energy source and a UV energy source for curing the UV curable powder coating;
whereby a metal substrate, decorated with at least two colors according to the predetermined pattern on at least one face of the metal substrate, is formed.

10. The system according to claim 9, wherein said device for applying a primer is a digital printer.

11. The system according to claim 9, wherein said primer is selected from a group of primers consisting of: UV based primers, solvent based primers and thermal based primers.

12. The system according to claim 9, further comprising an electrostatic gun for spraying the first color onto all faces of the metal substrate prior to applying the primer.
